# EUROPÄISCHE PATENTANMELDUNG

(11) **EP 4 711 025 A1**
(43) Veröffentlichungstag der Anmeldung: **18.03.2026**
(21) Anmeldenummer: 25202360.1
(22) Anmeldetag: 16.09.2025
(51) Int. Cl.: B01D 46/00, B01D 46/24

(54) **FILTERVORRICHTUNG UMFASSEND EINEN FILTER UND EINE FILTERAUFNAHMEVORRICHTUNG**

(30) Priorität: 16.09.2024 AT 507432024
(71) Anmelder: ETS Egger GmbH, 8952 Irdning (AT)
(72) Erfinder: Egger, Karl, 8943 Aigen im Ennstal (AT)
(74) Vertreter: Burger, Hannes Alfred

(57) **Zusammenfassung**

Die Erfindung betrifft eine Filtervorrichtung (1) umfassen einen Filter (3) und eine Filteraufnahmevorrichtung (2), wobei die Filteraufnahmevorrichtung (2) zur Aufnahme des Filters (3) und zur Durchströmung der Filteraufnahmevorrichtung (2) und des Filters (3) mit Luft geeignet ist, wobei die Filteraufnahmevorrichtung (2) ein becherförmiges erstes Schalenelement (4) und ein becherförmiges zweites Schalenelement (5) umfasst, wobei die zusammengeführten Schalenelemente (4, 5) einen Innenraum (6) der Filteraufnahmevorrichtung (2) definieren, wobei das erste Schalenelement (4) einen, einen ersten Boden (7) des ersten Schalenelements (4) durchdringenden und als erstes Rohr (8) ausgebildeten ersten Durchbruch (9) in den Innenraum (6) aufweisen, wobei der Filter (3) im Innenraum (6) mit dem ersten Rohr (8) koppelbar ist, sodass verunreinigte Luft durch das erste Rohr (8) mit daran gekoppeltem Filter (3) und durch den Filter (3) in den Innenraum (6) einströmbar und durch einen, einen zweiten Boden (10) des zweiten Schalenelements (5) durchdringenden zweiten Durchbruch (11) aus dem Innenraum (6) ausströmbar ist.

## Beschreibung

Die Erfindung betrifft eine Filtervorrichtung mit Filter und mit Fluid, insbesondere mit verschmutzter Luft, durchströmbarer Filteraufnahmevorrichtung, wobei die Filteraufnahmevorrichtung zur Aufnahme des Filters, zur Durchströmung der Filteraufnahmevorrichtung und des Filters mit Luft und damit zum Filtern von verunreinigter Luft ausgebildet ist. Dabei umfasst die Filteraufnahmevorrichtung zwei becherförmige Schalenelemente, die in zueinander zusammengeführter Positionierung einen Innenraum umschließen bzw. definieren, wobei der Filter im Innenraum aufgenommen ist, sodass verunreinigte Luft beim Durchströmen des Innenraumes gefiltert wird.

Aus dem Stand der Technik sind Filteraufnahmevorrichtungen zur Aufnahme eines Filters bekannt, wobei beispielsweise eine fließartige Matte oder sogar ein Aktivkohlefilter in einem dafür vorgesehenen Gehäuse aufgenommen ist, wobei ein Fluid durch entsprechend im Gehäuse dieser Filteraufnahmevorrichtungen vorgesehenen Fluidkanälen derartig geführt wird, dass es durch den Filter hindurchgeleitet wird. Nachteilig an den gängigen Lösungen ist, dass derartige Filteraufnahmevorrichtungen für jeweils speziell vorgesehene Filter hinsichtlich deren Ausgestaltungsform ausgebildet sind.

Das Anwendungsgebiet der vorliegenden Erfindung betrifft das Filtern von schadstoffbeladener Luft bei der Entfeuchtung von Innenräumen. Derartiges ist beispielsweise nach einem Wasserschaden in einem Gebäude notwendig. Dabei muss bei der Entfeuchtung des Gebäudes Sorge getragen werden, dass die von Entfeuchtungsvorrichtungen abzuführende Luft von Schadstoffen wie beispielsweise Mikroorganismen oder Schimmel gereinigt wird.

Gängige Filtervorrichtungen mit entsprechenden Filteraufnahmevorrichtungen sind dazu ungeeignet, da die Austauschbarkeit der Filter mitunter umständlich ist, die Filter auf Grund spezieller Ausgestaltungsformen ausschließlich beim Hersteller der jeweiligen Filteraufnahmevorrichtung beziehbar sind und/oder keine Filteraufnahmevorrichtungen für HEPA-Filter, insbesondere für Anwendungen mit hohem Feuchtegehalt der zu reinigenden Luft und/oder für hohe Volumenströme, kommerziell verfügbar sind.

Aufgabe der vorliegenden Erfindung war es, die Nachteile des Standes der Technik zu überwinden und eine Filtervorrichtung und eine Filteraufnahmevorrichtung zur Verfügung zu stellen, mittels derer ein Benutzer in der Lage ist, einen einfachen Filterwechsel durchzuführen und unterschiedliche Typen von Filtern, insbesondere von HEPA-Filtern zu verwenden.

Diese Aufgabe wird durch eine Vorrichtung gemäß den Ansprüchen gelöst.

Die erfindungsgemäße Filteraufnahmevorrichtung zur Aufnahme eines Filters, insbesondere eines HEPA-Filters, und zur Durchströmung der Filteraufnahmevorrichtung und des Filters mit Luft, umfasst ein becherförmiges erstes Schalenelement und ein becherförmiges zweites Schalenelement, wobei die zusammengeführten Schalenelemente einen Innenraum der Filteraufnahmevorrichtung definieren, wobei das erste Schalenelement einen, einen ersten Boden des ersten Schalenelements durchdringenden und als erstes Rohr ausgebildeten ersten Durchbruch in den Innenraum aufweisen, wobei der Filter im Innenraum mit dem ersten Rohr, insbesondere unter Zwischenschaltung eines Anschlussstutzens, koppelbar ist, sodass ein Fluid, insbesondere verunreinigte Luft, durch das erste Rohr mit daran gekoppeltem Filter und durch den Filter in den Innenraum einströmbar und durch einen, einen zweiten Boden des zweiten Schalenelements durchdringenden zweiten Durchbruch aus dem Innenraum ausströmbar ist.

Die Schalenelemente sind becherförmig ausgebildet, wobei ein jeweiliges Schalenelement beispielsweise wenigstens annähernd wie ein hohler Kegelstumpf oder ein Holzylinder mit einem jeweiligen Boden ausgebildet sein kann. Dabei weist ein jeweiliges Schalenelement ein darin aufnehmbares Volumen auf, wobei durch entsprechendes zusammenführen der Schalenelemente aus den jeweiligen Volumina ein, von den Schalenelementen umschlossener oder dadurch definierter Innenraum bereitgestellt wird. In diesem Innenraum kann schließlich der Filter entsprechend der vorhergegangenen Beschreibung aufgenommen sein.

Es kann folglich vorgesehen sein, dass das erste Schalenelement in einem ersten Boden des ersten Schalenelements einen, als erstes Rohr ausgebildeten ersten Durchbruch in den Innenraum aufweist und dass das zweite Schalenelement in einem zweiten Boden des zweiten Schalenelements eine, als zweites Rohr ausgebildeten zweiten Durchbruch in den Innenraum aufweist. Somit kann der Filter beispielsweise innerhalb des Innenraums mit dem ersten Rohr des ersten Schalenelements fluidisch gekoppelt werden. Sodann kann verunreinigte Luft durch das erste Rohr und durch den damit fluidisch gekoppelten Filter in den Innenraum der Filteraufnahmevorrichtung einströmen, um dann, durch den Filter gereinigt aus dem zweiten Rohr des zweiten Schalenelements auszuströmen.

Des Weiteren kann es zweckmäßig sein, wenn das erste Schalenelement und das zweite Schalenelement baugleich ausgebildet sind.

Ferner kann vorgesehen sein, dass das erste Schalenelement und das zweite Schalenelement im Bereich einer jeweiligen Öffnung jeweils wenigstens zwei klauenartige Fortsätze mit zwischen den Fortsätzen ausgebildeten Aussparungen aufweisen, wobei das erste Schalenelement und das zweite Schalenelement zur Ausbildung des Innenraumes derart zusammenführbar sind, dass die Fortsätze des ersten Schalenelement in die Aussparungen des zweiten Schalenelements eingreifen und vice versa, sodass die jeweiligen Fortsätze und Aussparungen ineinander verzahnt positioniert sind.

Darüber hinaus kann vorgesehen sein, dass die Fortsätze der Schalenelemente in einem jeweiligen distalen Endbereich jeweils eine Nut aufweisen, wobei im zusammengeführten Zustand der beiden Schalenelemente eine in eine Umfangsrichtung der Schalenelemente umlaufende Ringnut aus den einzelnen Nuten ausgebildet ist, wobei die Ringnut zur Aufnahme eines ringartigen Spannelements vorgesehen bzw. ausgebildet ist.

Vorteilhaft ist auch eine Ausprägung, gemäß welcher vorgesehen sein kann, dass das ringartige Spannelement elastisch ist und in der Form eines O-Ringes mit vorzugsweise rundem Querschnitt ausgebildet ist, wobei die beiden Schalenelemente bei Positionierung des Spannelementes in der Ringnut durch Wirkverbindung der Nuten mit dem Spannelement zueinander positionsfixiert, insbesondere zueinander aneinandergepresst positionsfixiert, sind.

Gemäß einer Weiterbildung ist es möglich, dass das erste Schalenelement und das zweite Schalenelement jeweils aus Werkzeughälften entformbar, insbesondere durch ein Spritzgussverfahren herstellbar, ausgebildet sind.

Ferner kann es zweckmäßig sein, wenn die Schalenelemente hinterschneidungsfrei ausgebildet sind. Unter hinterschneidungsfrei ist in diesem Zusammenhang zu verstehen, dass die Schalenelemente keine Teilabschnitte umfassen, die die Entformbarkeit eines Schalenelements aus einem Spritzgusswerkzeug in Richtung einer Entformungsrichtung blockieren könnten.

Darüber hinaus kann vorgesehen sein, dass der Anschlussstutzen als elastisches Kopplungselement zur fluidischen Kopplung des ersten Rohrs mit dem Filter ausgebildet ist.

Die Erfindung betrifft schließlich auch noch eine Filtervorrichtung zum Filtern von Luft, umfassen einen Filter, insbesondere einen HEPA-Filter, und eine Filteraufnahmevorrichtung entsprechend der vorhergegangenen Ausführungen zur Aufnahme des Filters.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausführungsform einer Filtervorrichtung mit Filteraufnahmevorrichtung und Filter in zerlegtem Zustand;
- Fig. 2: die Ausführungsform der Filtervorrichtung im zusammengebauten Zustand bzw. bei zusammengefügten Schalenelementen der Filteraufnahmevorrichtung;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

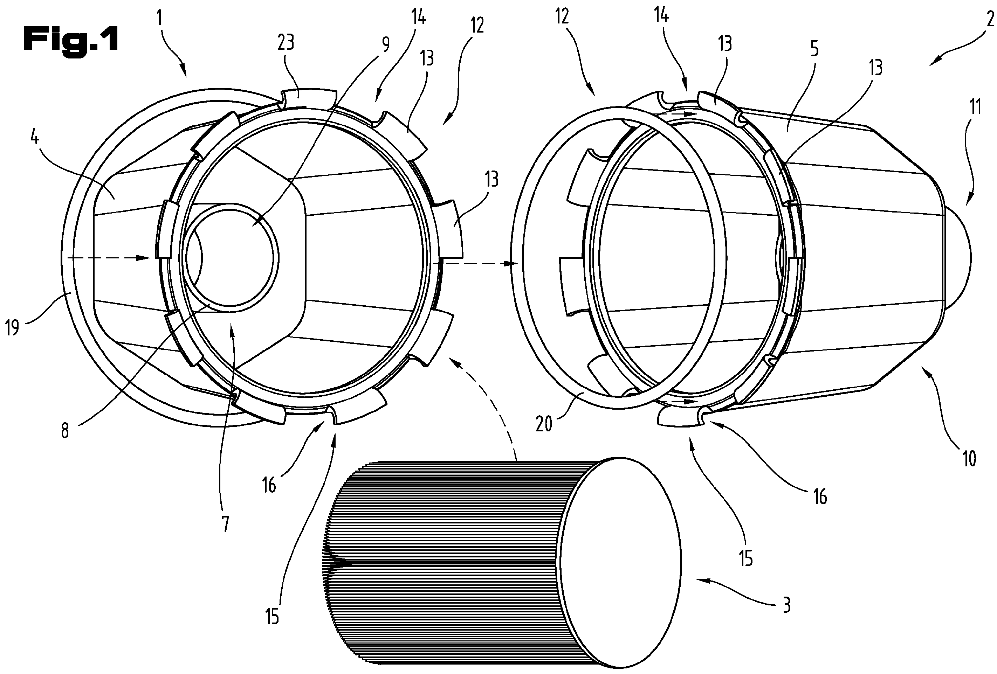

In Fig. 1 ist eine mögliche Ausführungsform einer Filtervorrichtung 1 zum Filtern von Luft in zerlegtem, also nicht zusammengebauten Zustand und in stark vereinfachter, schematischer Darstellung gezeigt. Die Filtervorrichtung 1 umfasst eine Filteraufnahmevorrichtung 2 und einen Filter 3.

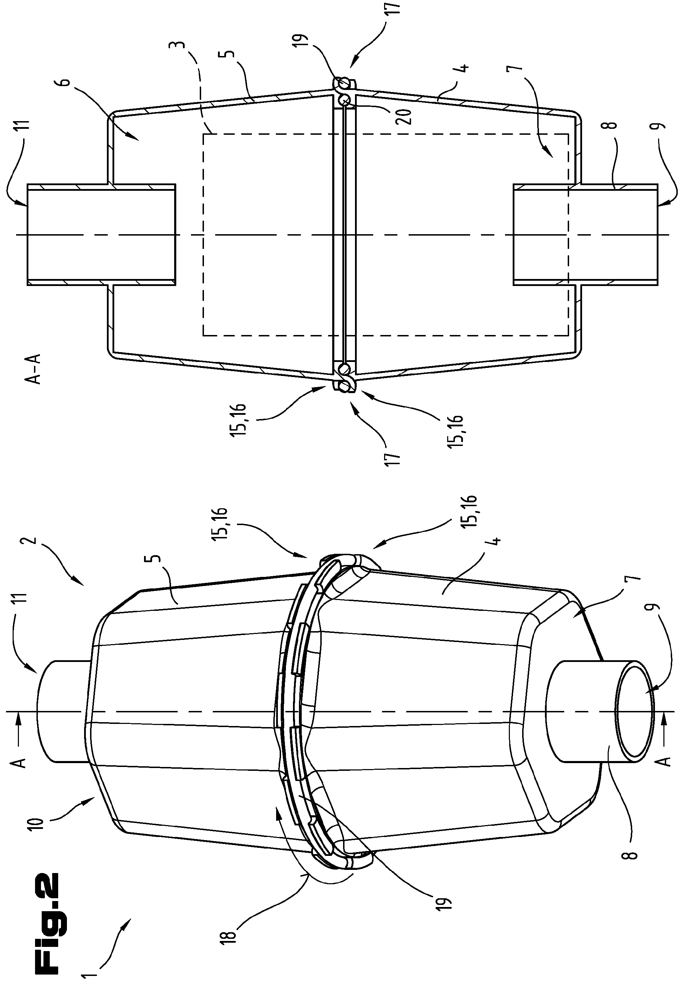

Die Filteraufnahmevorrichtung 2 ist zur Aufnahme des Filters 3, insbesondere eines HEPA-Filters, und zur Durchströmung derselben und des Filters 3 mit verschmutzter Luft geeignet. Dazu umfasst die Filteraufnahmevorrichtung 2 ein becherförmiges erstes Schalenelement 4 und ein becherförmiges zweites Schalenelement 5, wobei die zusammengeführten Schalenelemente 4 und 5 einen Innenraum 6 (nur in Fig. 2 dargestellt) der Filteraufnahmevorrichtung 2 definieren.

In der Fig. 2 ist die Ausführungsform der Filtervorrichtung 1 im zusammengebauten Zustand bzw. bei zusammengeführten Schalenelementen 4 und 5 der Filteraufnahmevorrichtung 2 gezeigt, wobei für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung der vorangegangenen Fig. 1 hingewiesen bzw. Bezug genommen. In dieser Darstellung ist der Innenraum 6 zu erkennen.

Nachfolgen wird nicht explizit auf die einzelnen Darstellungen in Fig. 1 und Fig. 2 hingewiesen. Es werden die Darstellungen in Fig. 1 und Fig. 2 in einer Gesamtschau diskutiert.

Die Filteraufnahmevorrichtung 2 zeichnet sich dadurch aus, dass das erste Schalenelement 4 einen, einen ersten Boden 7 des ersten Schalenelements 4 durchdringenden und als erstes Rohr 8 ausgebildeten ersten Durchbruch 9 in den Innenraum 6 aufweisen, wobei der Filter 3 im Innenraum 6 mit dem ersten Rohr (8), insbesondere unter Zwischenschaltung eines Anschlussstutzens, koppelbar ist, sodass ein Fluid, insbesondere verunreinigte Luft, durch das erste Rohr 8 mit daran gekoppeltem Filter 3 und durch den Filter 3 in den Innenraum 6 einströmbar und durch einen, einen zweiten Boden 10 des zweiten Schalenelements 5 durchdringenden zweiten Durchbruch 11 aus dem Innenraum 6 ausströmbar ist.

Das erste Schalenelement 4 und das zweite Schalenelement 5 sind dabei vorzugsweise baugleich ausgebildet.

Ferner kann auch noch vorgesehen sein, dass das erste Schalenelement 4 und das zweite Schalenelement 5 im Bereich einer jeweiligen Öffnung 12 jeweils wenigstens zwei klauenartige Fortsätze 13 mit zwischen den Fortsätzen 13 ausgebildeten Aussparungen 14 aufweisen, wobei das erste Schalenelement 4 und das zweite Schalenelement 5 zur Ausbildung des Innenraumes 6 derart zusammenführbar sind, dass die Fortsätze 13 des ersten Schalenelement 4 in die Aussparungen 14 des zweiten Schalenelements 5 eingreifen und vice versa, sodass die jeweiligen Fortsätze 13 und Aussparungen 14 ineinander verzahnt positioniert sind.

In diesem Zusammenhang kann es sinnvoll sein, wenn die Fortsätze 13 der Schalenelemente 4 und 5 in einem jeweiligen distalen Endbereich 15 jeweils eine Nut 16 aufweisen, wobei im zusammengeführten Zustand der beiden Schalenelemente 4 und 5 eine in eine Umfangsrichtung 18 der Schalenelemente 4 und 5 umlaufende Ringnut 17 aus den einzelnen Nuten 16 ausgebildet ist, wobei die Ringnut 17 zur Aufnahme eines ringartigen Spannelements 19 vorgesehen bzw. ausgebildet ist. In diesem Aspekt kann jedenfalls vorgesehen sein, dass das ringartige Spannelement 19 elastisch ist und in der Form eines O-Ringes mit vorzugsweise rundem Querschnitt ausgebildet ist, wobei die beiden Schalenelemente 4 und 5 bei Positionierung des Spannelementes 19 in der Ringnut 17 durch Wirkverbindung der Nuten 16 mit dem Spannelement 19 zueinander positionsfixiert, insbesondere zueinander aneinandergepresst positionsfixiert, sind.

Sofern die beiden Schalenelemente 4 und 5 zusammengeführt werden, kann auch noch eine Dichtvorrichtung 20 dazwischen im Bereich einer jeweiligen Öffnung 12 der Schalenelemente 4 und 5 positioniert werden.

Die Schalenelemente 4 und 5 können vorzugsweise durch ein Spritzgussverfahren hergestellt werden, wofür es zweckmäßig sein kann, dass die Schalenelemente 4 und 5 hinterschneidungsfrei ausgebildet sind, sodass die Entformbarkeit eines jeweiligen Schalenelementes 4 bzw. 5 gewährleistet ist.

Um eine luftdichte Kopplung zwischen Filter 3 und ersten Rohr 8 gewährleisten zu könne, kann es sinnvoll sein, dass der Anschlussstutzen als elastisches Kopplungselement zur fluidischen Kopplung des ersten Rohrs 8 mit dem Filter 3 ausgebildet ist. Ein Anschlussstutzen ist nicht in den Fig. 1 und Fig. 2 gezeigt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Filtervorrichtung
- 2: Filteraufnahmevorrichtung
- 3: Filter
- 4: Erstes Schalenelement
- 5: Zweites Schalenelement
- 6: Innenraum
- 7: Erster Boden
- 8: Erstes Rohr
- 9: Erster Durchbruch
- 10: Zweiter Boden
- 11: Zweiter Durchbruch
- 12: Öffnung
- 13: Fortsatz
- 14: Aussparung
- 15: Distaler Endbereich
- 16: Nut
- 17: Ringnut
- 18: Umfangsrichtung
- 19: Spannelement
- 20: Dichtvorrichtung

## Patentansprüche

1. Filteraufnahmevorrichtung (2) zur Aufnahme eines Filters (3), insbesondere eines HEPA-Filters, und zur Durchströmung der Filteraufnahmevorrichtung (2) und des Filters (3) mit Luft, die Filteraufnahmevorrichtung (2) umfassend ein becherförmiges erstes Schalenelement (4) und ein becherförmiges zweites Schalenelement (5), wobei die zusammengeführten Schalenelemente (4, 5) einen Innenraum (6) der Filteraufnahmevorrichtung (2) definieren, **dadurch gekennzeichnet, dass** das erste Schalenelement (4) einen, einen ersten Boden (7) des ersten Schalenelements (4) durchdringenden und als erstes Rohr (8) ausgebildeten ersten Durchbruch (9) in den Innenraum (6) aufweisen, wobei der Filter (3) im Innenraum (6) mit dem ersten Rohr (8), insbesondere unter Zwischenschaltung eines Anschlussstutzens, koppelbar ist, sodass ein Fluid, insbesondere verunreinigte Luft, durch das erste Rohr (8) mit daran gekoppeltem Filter (3) und durch den Filter (3) in den Innenraum (6) einströmbar und durch einen, einen zweiten Boden (10) des zweiten Schalenelements (5) durchdringenden zweiten Durchbruch (11) aus dem Innenraum (6) ausströmbar ist.

2. Filteraufnahmevorrichtung (2) nach Anspruch 1, **dadurch gekennzeichnet, dass** das erste Schalenelement (4) und das zweite Schalenelement (5) baugleich ausgebildet sind.

3. Filteraufnahmevorrichtung (2) nach einem der vorhergehenden Ansprüche, **dadurch gekennzeichnet, dass** das erste Schalenelement (4) und das zweite Schalenelement (5) im Bereich einer jeweiligen Öffnung (12) jeweils wenigstens zwei klauenartige Fortsätze (13) mit zwischen den Fortsätzen (13) ausgebildeten Aussparungen (14) aufweisen, wobei das erste Schalenelement (4) und das zweite Schalenelement (5) zur Ausbildung des Innenraumes (6) derart zusammenführbar sind, dass die Fortsätze (13) des ersten Schalenelement (4) in die Aussparungen (14) des zweiten Schalenelements (5) eingreifen und vice versa, sodass die jeweiligen Fortsätze (13) und Aussparungen (14) ineinander verzahnt positioniert sind.

4. Filteraufnahmevorrichtung (2) nach Anspruch 3, **dadurch gekennzeichnet, dass** die Fortsätze (13) der Schalenelemente (4, 5) in einem jeweiligen distalen Endbereich (15) jeweils eine Nut (16) aufweisen, wobei im zusammengeführten Zustand der beiden Schalenelemente (4, 5) eine in eine Umfangsrichtung (18) der Schalenelemente (4, 5) umlaufende Ringnut (17) aus den einzelnen Nuten (16) ausgebildet ist, wobei die Ringnut (17) zur Aufnahme eines ringartigen Spannelements (19) vorgesehen bzw. ausgebildet ist.

5. Filteraufnahmevorrichtung (2) nach Anspruch 3, **dadurch gekennzeichnet, dass** das ringartige Spannelement (19) elastisch ist und in der Form eines O-Ringes mit vorzugsweise rundem Querschnitt ausgebildet ist, wobei die beiden Schalenelemente (4, 5) bei Positionierung des Spannelementes (19) in der Ringnut (17) durch Wirkverbindung der Nuten (16) mit dem Spannelement (19) zueinander positionsfixiert, insbesondere zueinander aneinandergepresst positionsfixiert, sind.

6. Filteraufnahmevorrichtung (2) nach einem der vorhergehenden Ansprüche, **dadurch gekennzeichnet, dass** das erste Schalenelement (4) und das zweite Schalenelement (5) jeweils aus Werkzeughälften entformbar, insbesondere durch ein Spritzgussverfahren herstellbar, ausgebildet sind.

7. Filteraufnahmevorrichtung (2) nach Anspruch 6, **dadurch gekennzeichnet, dass** die Schalenelemente (4, 5) hinterschneidungsfrei ausgebildet sind.

8. Filteraufnahmevorrichtung (2) nach einem der vorhergehenden Ansprüche, **dadurch gekennzeichnet, dass** der Anschlussstutzen als elastisches Kopplungselement zur fluidischen Kopplung des ersten Rohrs (8) mit dem Filter (3) ausgebildet ist.

9. Filtervorrichtung (1) zum Filtern von Luft, umfassen einen Filter (3), insbesondere einen HEPA-Filter, und eine Filteraufnahmevorrichtung (2) nach einem der vorhergehenden Ansprüche zur Aufnahme des Filters (3).
